**Europäisches Patentamt**

**European Patent Office**

**Office européen des brevets**

(11) Veröffentlichungsnummer: **0 108 162**

**A1**

(12) # EUROPÄISCHE PATENTANMELDUNG

(21) Anmeldenummer: **82110298.5**

(51) Int. Cl.³: **H 04 N 1/18**

(22) Anmeldetag: **09.11.82**

(43) Veröffentlichungstag der Anmeldung: **16.05.84** Patentblatt **84/20**

(84) Benannte Vertragsstaaten:
**AT BE CH DE FR GB IT LI NL SE**

(71) Anmelder: **DR.-ING. RUDOLF HELL GmbH**
**Grenzstrasse 1-5**
**D-2300 Kiel 14(DE)**

(72) Erfinder: **Dätwyler, Max**
**Thunstetterstrasse 13**
**CH-40900 Langenthal(CH)**

(72) Erfinder: **Gast, Uwe**
**Rammsmoor 2**
**D-2300 Kiel-Rammsee(DE)**

(54) Verfahren und Einrichtung zur Gravur von Druckformen, insbesondere Tiefdruckformen.

(57) Verfahren und Einrichtung zum Herstellen von Druckformen, insbesondere Tiefdruckformen, bei dem aus der Oberfläche der Druckform mittels eines Gravierorgans, das von Signalen gesteuert wird, die durch fotoelektrische Abtastung von Vorlagen gewonnen werden, entsprechend dem Druckraster verteilte näpfchenförmige Vertiefungen graviert werden, wobei die Vertiefungen gleichzeitig durch mindestens zwei Gravierorgane, die in Umfangsrichtung des Zylinders gegeneinander versetzt sind, erzeugt werden.

Fig. 1

EP 0 108 162 A1

## Beschreibung der Erfindung

Verfahren und Einrichtung zur Gravur von Druckformen, insbesondere Tiefdruckformen.

### Technisches Gebiet

Die Erfindung betrifft ein Verfahren und Vorrichtungen zur Gravur von Druckformen, insbesondere Tiefdruckformen gemäß dem Oberbegriff
der Ansprüche 1, 12 und 13.

### Zugrundeliegender Stand der Technik.

Es ist aus der US-PS 3,582,549 bekannt, Druckformzylinder für den Tiefdruck elektromechanisch zu gravieren. In die Zylinderoberfläche
werden die zu druckenden Motive, Bilder oder
Text, als reguläres Rasternetz von kleinen Vertiefungen, die auch Näpfchen genannt werden,
durch einen elektromagnetisch angetriebenen
Stichel eingraviert. Diese Näpfchen weisen je
nach dem darzustellenden Tonwert unterschiedliche Volumina auf. Der Gravurvorgang ist beispielsweise im Sonderdruck aus der Fachzeitschrift "Der Polygraph", Heft 18, 1965, Verlagsort Frankfurt am Main, Elektronische Zylin-

- 2 -

dergravur für den Mehrfarbendruck, Dr.-Ing.
Rudolf Hell GmbH, Kiel im einzelnen beschrieben.

Hierbei erfolgt die tonwertabhängige Steuerung
der Graviertiefe durch fotoelektrische Abtastung von Vorlagen, z. B. Fotomontagen, die auf
einem rotierenden Abtastzylinder aufgespannt
sind. Die Vorlagenabtastung erfolgt mittels
eines Abtastorgans, das auf einem axial zum
Abtastzylinder von einer Spindel bewegten
Schlitten angeordnet ist. Die Gravur erfolgt
mittels eines Gravierorgans, das aus einem
elektromagnetisch angetriebenen Stichel besteht,
der ebenfalls auf einem von einer Spindel axial
zum Druckformzylinder bewegten Schlitten angeordnet ist. Es sind Ausführungsformen bekannt,
bei denen sowohl der Abtastzylinder als auch
der Druckformzylinder einen gemeinsamen Antrieb
haben, als auch Anordnungen, bei denen Abtast-
und Druckzylinder separat angetrieben werden.
Maßstabsänderungen können dadurch vorgenommen
werden, daß für Abtastzylinder und Druckformzylinder unterschiedliche Durchmesser gewählt
werden, oder indem eine elektronische Zwischenspeicherung der Bilddaten vorgenommen wird,
wie sie z. B. in der DE-PS 11 93 534 beschrieben
ist, wobei die Ein- und Ausgabefrequenzen für
den Speicher entsprechend dem Maßstab veränderbar sind.

In dem Prozeß von der Vorlagenherstellung bis
zum fertigen Druckprodukt stellt die eigentliche Druckformherstellung im Tiefdruck immer
noch wegen der Aktualität, Redaktionsschluß

0108162

- 3 -

einen zeitlichen Engpaß dar, und es besteht grundsätzlich der Wunsch, die Zeit, die zur Herstellung der Tiefdruckform erforderlich ist, noch weiter zu verkürzen. Aufgrund der großen Abmessungen der Druckform und der großen Anzahl der Näpfchen, einige Tausend auf einem $cm^2$, und der Tatsache, daß der Frequenz, mit der das elektromechanische Graviersystem arbeitet, bezüglich der Herstellung der Druckform Grenzen gesetzt sind, kann mit den eingangs beschriebenen Druckformgraviermaschinen die Gravurgeschwindigkeit nicht mehr erhöht werden.

Offenbarung der Erfindung

Der vorliegenden Erfindung liegt daher die Aufgabe zugrunde, ein Verfahren und eine Vorrichtung zur Herstellung von Druckformen für den Tiefdruck anzugeben, durch die die Herstellungszeit der Druckformen erheblich verkürzt werden kann.

Die Erfindung erreicht dies durch die im kennzeichnenden Teil des Anspruchs 1 und in den kennzeichnenden Teilen der Ansprüche 12 und 13 angegebenen Merkmale.

Vorteilhafte Weiterbildungen der Erfindung sind in den Ansprüchen 2-27 angegeben. Es ist bereits aus der DE-AS 26 58 502 bekannt, bei Graviermaschinen mehrere Gravierorgane am Umfang des Druckzylinders verteilt anzuordnen. Diese werden aber nicht gleichzeitig betrieben, sondern dienen dazu, Rasternetze mit frei wählbaren

- 4 -

Rasterwinkeln zu erzeugen, indem die Gravierorgane mit zueinander zeitlich versetzten Taktfolgen angesteuert werden. Eine Erhöhung der
Graviergeschwindigkeit ergibt sich dadurch nicht.

Kurze Beschreibung der Zeichnungen

Die Erfindung wird im folgenden anhand der
Figuren 1 bis 14 näher erläutert.

Es zeigen:

Figur 1 eine perspektivische Ansicht einer
Graviermaschine,

Figur 2 eine schematische Draufsicht auf einen
Teil der Graviermaschine gemäß Figur 1,

Figur 3 eine Schnittzeichnung eines Ausführungsbeispiels der Erfindung,

Figur 4 eine weitere Schnittzeichnung eines
weiteren Ausführungsbeispiels der
Erfindung,

Figur 5 ein Diagramm für den Verlauf der Gravur
bei einem Ausführungsbeispiel der
Erfindung,

Figur 6 ein Diagramm für den Verlauf der Gravur
bei einem weiteren Ausführungsbeispiel
der Erfindung,

0108162

- 5 -

Figur 7 eine schematische Seitenansicht einer weiteren Ausführung einer Graviermaschine,

Figur 8 ein Diagramm für den Verlauf der Gravur entsprechend dem Ausführungssbeispiel der Figur 7,

Figur 9 eine·schematische Seitenansicht einer weiteren Ausführungsform der Graviermaschine,

Figur 10 eine schematische Seitenansicht einer weiteren Ausführungsform der Erfindung,

Figur 11 eine schematische Darstellung des Vorgangs der Justierung der Graviereinheiten,

Figur 12 ein Ausführungsbeispiel einer Graviereinrichtung mit liegendem Zylinder,

Figur 13 eine Schnittzeichnung der Graviermaschine gemäß Figur 12 und

Figur 14 ein weiteres Ausführungsbeispiel einer Graviermaschine mit liegendem Zylinder.

- 6 -

## Bester Weg zur Ausführung der Erfindung

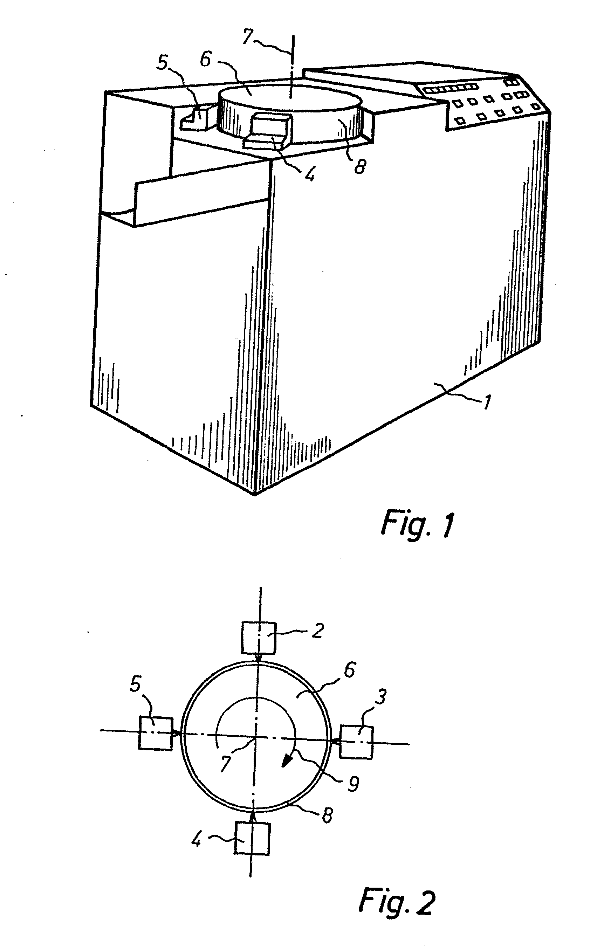

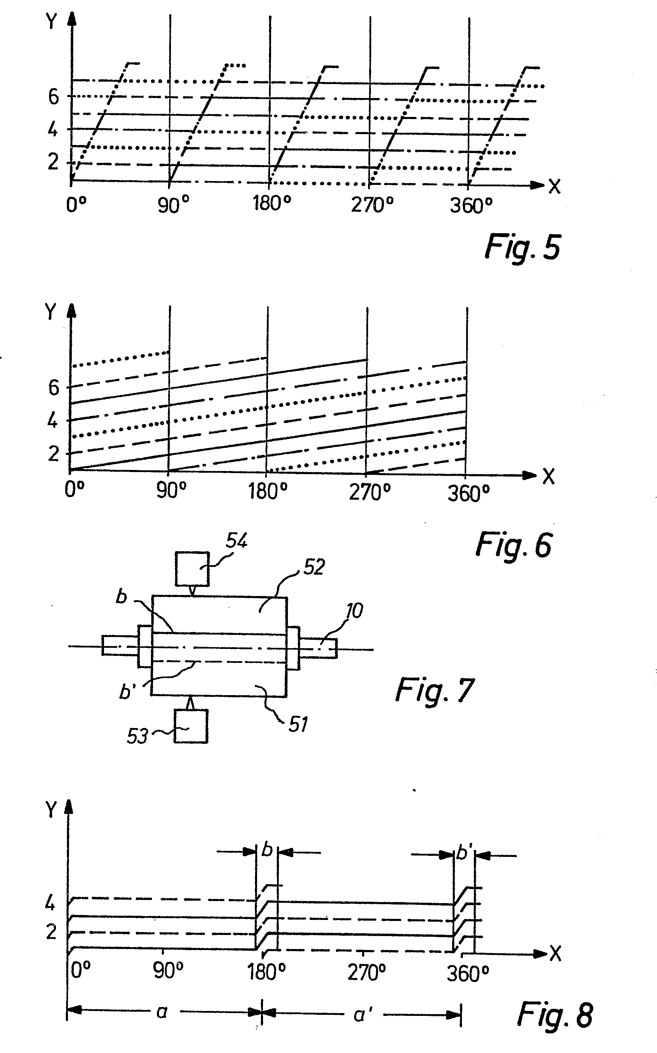

In Figur 1 ist perspektivisch eine Graviereinrichtung 1 dargestellt, deren eigentlicher Gravierteil in Figur 2 schematisch und in Draufsicht gezeigt ist. Diese Graviereinrichtung 1 weist vier Graviersysteme, d. h. vier Gravierorgane 2, 3, 4 und 5, auf, von denen in Figur 1 nur die Graviersysteme 4 und 5, die weiteren Graviersysteme in der Schnittzeichnung Figur 2 zu sehen sind. Die Graviereinheiten 2, 3, 4 und 5 sind in Umfangsrichtung eines Zylinders 6 gleichmäßig verteilt angeordnet und liegen in einer im wesentlichen horizontalen Ebene. Die Achse 7 des Zylinders 6 läuft im wesentlichen in senkrechter Richtung. Entlang der Mantelfläche des Zylinders 6 erstreckt sich über den ganzen Zylinderumfang eine Druckform 8. Im Falle, daß der Zylinder selbst der Druckzylinder ist, so bildet dessen Mantelfläche die Druckform 8. Es ist jedoch auch möglich, auf die Mantelfläche des Zylinders 6 eine sich über den ganzen Umfang erstreckende Druckform aufzubringen, die mit dem Zylinder lösbar verbunden ist. Des weiteren ist es möglich, am Zylinder 6 zwei oder weitere Druckformen zu befestigen, die in Umfangsrichtung des Zylinders aneinanderstoßen, was in Figur 7 näher erläutert wird.

Die Gravierorgane 2, 3, 4 und 5 sind an sich bekannter Bauart und gravieren aus der Druckformoberfläche die gemäß dem Gravurraster

- 7 -

verteilten Näpfchen, die je nach dem zu reproduzierenden Tonwert in Tiefe und Breite, d. h.
in ihrem Volumen, variieren. Die entsprechende
Steuerung der Graviereinheiten von der Abtasteinheit kann beispielsweise gemäß der US-PS
3,582,549 erfolgen.

Figur 2 zeigt die Anordnung der Graviersysteme 2,
3, 4 und 5 am Umfang des Druckzylinders 6, der
sich in Richtung des Pfeils 9 dreht.

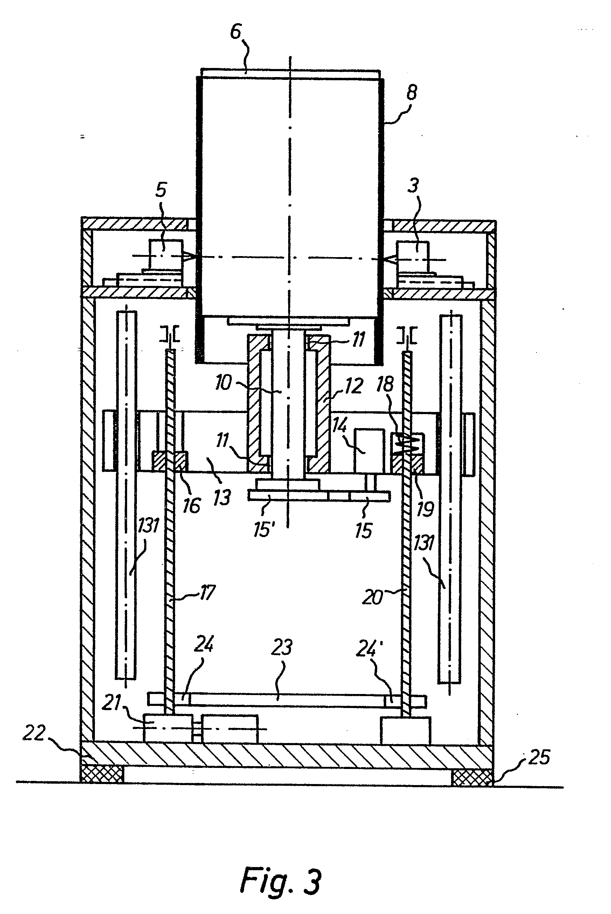

Figur 3 zeigt eine Ausführungsform der Erfindung, bei der der Zylinder 6 auf einer Welle 10
sitzt, die in Lagern 11 in einem Spindelstock 13
gelagert ist. Der Spindelstock 13 ist auf Führungen 131 vertikal verschiebbar und trägt einen
Antriebsmotor 14, welcher über Zahnräder 15 und
15' die Welle 10 antreibt. Der Spindelstock 13
stützt sich über eine Mutter 16 auf eine Vorschubspindel 17 und über eine Ausgleichfeder 18
und eine Mutter 19 auf eine Entlastungsspindel 20.
Die Vorschubspindel 17 ist in einer Vorschubeinheit 21 auf einer Grundplatte 22 gelagert.
Die Entlastungsspindel 20 wird über Zahnriemen 23
und Zahnriemenscheiben 24 und 24' mit der Vorschubspindel synchronisiert. Dämpfer 25 sorgen
für eine schwingungsisolierte Lagerung der
Maschine.

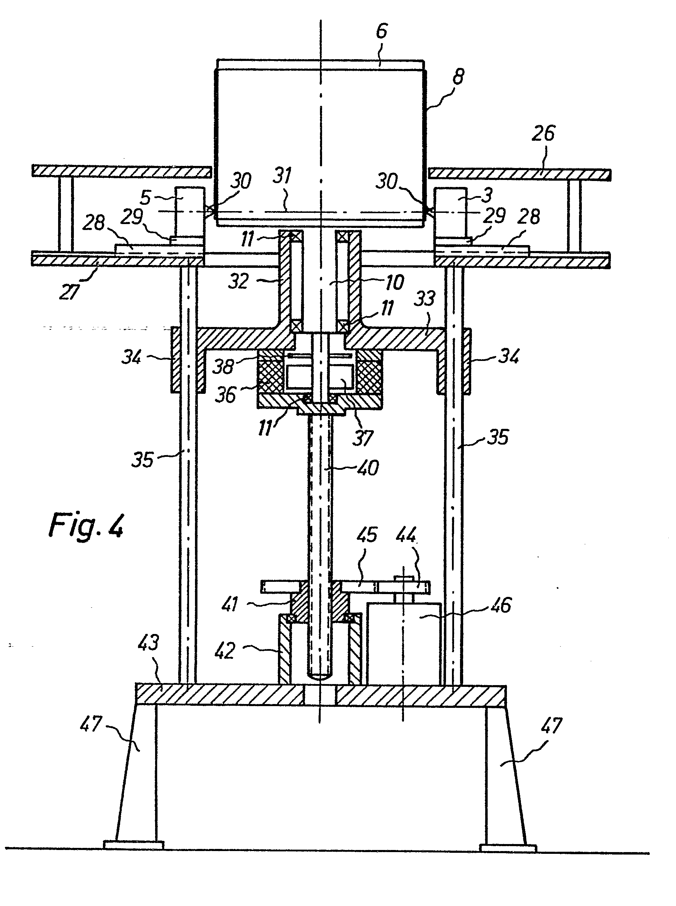

Figur 4 zeigt ein weiteres Beispiel für den Aufbau einer solchen Graviermaschine zur schnellen
Gravur eines Strangs von Wickelplatten. Der
Zylinder 6 ist zur Aufnahme der Wickelplatten, d. h. der Druckform 8, eingerichtet, die in vorgebogener Form als Einzelseitenformate oder
Doppelseitenformate aufgebracht werden. Dazu
wird der Zylinder 6 in eine Position gehoben,
daß die auf einer Bühne 26 bereitgestellten
Wickelplatten in der richtigen Aufspannebene
liegen. Unter der Bühne 26 liegt der Gravierorganträger 27, auf dem mehrere Gravierorgane,
z. B. die Gravierorgane 2, 3, 4 und 5 der Fig. 2,
mittels radial verschiebbarer Schlitten 28
angeordnet sind. Höhenjustierungen 29 sorgen
dafür, daß sich die Stichelspitzen 30 der Gravierorgane so justieren lassen, daß alle genau
auf der strichpunktiert angedeuteten Ebene 31
liegen. Der Zylinder 6 sitzt wie in Fig. 3 auf
einer Welle 10, die mittels Lagern 11 in einem
Lagerhals 32 einer Motorbühne 33 gelagert ist.
Die Motorbühne 33 wiederum ist auf Führungen 34
vertikal auf mehreren Führungsstangen 35 verschiebbar. Die Motorbühne 33 trägt an ihrer
Unterseite den Stator 36 eines Motors, dessen
Rotor 37 sowie eine Taktscheibe 38 auf der
Verlängerung der Welle 10 angeordnet sind. Die
Motorbühne 33 stützt sich über den Stator 36
auf eine Vorschubspindel 40, die mit einer
Mutter 41 im Eingriff steht. Die Mutter 41 ist
in einem Lagerhals 42 auf der Grundplatte 43
des Gerätes gelagert und trägt ein Zahnrad 44,
das mit einem Ritzel 45 auf der Antriebswelle
eines Vorschubmotors 46 kämmt. Füße 45 unter

- 9 -

der Grundplatte 43 sorgen dafür, daß das Ende
der Spindel 10 in der tiefsten Stellung des
Zylinders 6 noch frei von der Aufstellfläche
des Gerätes ist.

Vor Beginn einer Gravur werden zunächst die
Gravierorgane 2, 3, 4 und 5 in ihren Führungsschlitten 28 radial nach außen bewegt, so daß
die Stichelspitzen 30 vom Zylinder 6 frei sind.
Danach wird der Zylinder 6 durch Einschalten
des Vorschubmotors 46 soweit angehoben, daß er
die richtige Position zur Aufnahme der auf der
Bühne 26 aufgestellten vorgebogenen Wickelplatten einnimmt. Nicht dargestellte Endschalter
sorgen für exaktes Stoppen in dieser Position.
Nach Aufspannen der Wickelplatten (schematisch
durch 8 dargestellt) wird in gleicher Weise der
Zylinder 6 bis zum Gravurstartpunkt abgesenkt.
Danach werden die Gravierorgane 2, 3, 4 und 5
von Hand oder motorisch radial in Gravierstellung zugestellt. Die Gravierorgane stützen sich
dabei (in der Figur nicht näher dargestellt)
gegen leichten Federdruck mit Gleitelementen
gegen die Wickelplatten 8 und stellen so den
genauen Bezugsabstand zwischen Stichelspitze 30
und Oberfläche der Wickelplatte 8 her. Zur
Gravur wird der Motor 36, 37 eingeschaltet.
Nach Hochlauf werden die bis dahin elektrisch
zurückgezogenen Stichelspitzen 30 freigegeben,
und der Vorschubmotor 46 wird eingeschaltet.
Die Gravur erfolgt nun so, daß durch Drehung
der Spindel 10 während einer Zylinderumdrehung
eine Vorschubbewegung entsteht, die gleich dem
Abstand zweier benachbarter Rasterpunktlinien

- 10 -

in Achsrichtung des Zylinders 6, multipliziert mit der Anzahl n der Gravierorgane, ist. Die Gravur entsteht dabei als n-gängige Helix. Ebenso können natürlich die Vorschubbewegungen als Schritt nach jeder Zylinderumdrehung gemäß dem in der DE-PS 25 08 737 beschriebenen Verfahren vorgenommen werden. Auch dieser Vorschubschritt entspräche dem axialen Rasterlinienabstand, multipliziert mit der Anzahl n der Gravierorgane. Die Gravierzeit verkürzt sich in beiden Fällen auf 1/n der Gravierzeit mit einem Gravierorgan.

Im letzteren Falle dürften naturgemäß die Gravierorgane 2, 3, 4 und 5 nicht alle auf die Ebene 31 einjustiert werden, sondern in Drehrichtung des Zylinders 6 aufeinanderfolgende Stichel müssen mittels der Höhenjustierung 29 so eingerichtet werden, daß sie um einen axialen Gravierlinienabstand versetzt sind.

Die genaue Zuordnung der Rasterpunkte zueinander entsteht dabei, wie oben beschrieben, durch Zuordnung von Drehbewegung, Gravierfrequenz und Vorschubbewegung.

Vorzugsweise treibt man dazu, wie in der US-PS 3,582,549 beschrieben, die Motoren 36, 37 und 46 aus einem frequenzveränderlichen Kunstnetz und bildet die Motoren als Synchronmotoren bzw. Schrittmotoren aus. Elektronisch lassen sich beliebige Übersetzungsverhältnisse bzw. Schrittlängen für den Vorschub einstellen, die auch zur Anpassung an den jeweiligen Zylinderumfang sowie zur Erzeugung verschiedener Rasterkonfigurationen oder Rasterweiten dienen können. Die Erzeugung des Bildsignals zur Gravur kann durch eine am gleichen Kunstnetz mit den synchron laufenden Abtastmaschinen erfolgen, in der die Gravierorgane 29 durch elektronische optische Abtastorgane, die Wickelplatten 26 durch Bildvorlagen ersetzt werden. Es ist aber auch denkbar, nur einen Abtastkopf einzusetzen, die Graviersignale nach Digitalisierung bildlinienweise zwischenzuspeichern und sie, wie es die DE-PS 25 08 737 beschreibt, so aus den Speichern abzurufen, daß sie zur richtigen Zeit am richtigen Gravierorgan in richtiger Folge anstehen. Auch die Speicherung eines gesamten Strangs auf einem geeigneten Speichermedium (z. B. Plattenspeicher) ist heute durchaus möglich. Zur Gravur wäre dann die beschriebene Schnellgraviereinrichtung über ein geeignetes Steuerwerk mit dem Plattenlaufwerk zu verbinden.

Anhand der Figur 5 wird eine Möglichkeit des Ablaufs des Graviervorgangs erläutert. Die Figur 5 zeigt die Abwicklung der Druckform 6 in die Zeichenebene, wobei in Richtung der Abszissenachse X der Zylinderumfang aufgetragen ist, während die Ordinatenachse Y in Richtung der Zylinderachse zeigt. Auf der Abszissenachse ist mittels der entsprechenden Winkelangabe die Stellung der einzelnen Graviereinheiten eingetragen. Auf den parallel zur Achse X und in Umfangsrichtung des Zylinders 6 verlaufenden Zeilen liegen die einzelnen von den Graviereinheiten herausgearbeiteten Vertiefungen bzw. Näpfchen, die jedoch nicht näher dargestellt sind. Die Wege, die die einzelnen Graviereinheiten bezüglich der Druckform 6 bzw. 8 während des Graviervorganges beschreiben, sind verschiedenartig dargestellt, nämlich für die erste Graviereinheit durch eine ausgezogene Linie, für die zweite Graviereinheit durch eine strichpunktierte Linie, für die dritte Graviereinheit durch eine punktierte Linie und für die vierte Graviereinheit durch eine gestrichelte Linie. Bei dem in Figur 5 gezeigten Verlauf des Gravierens arbeitet jede Graviereinheit zuerst entlang der Zeile 1 Näpfchen heraus, wobei der Zylinder 6 gedreht wird. Nach einer Drehung des Zylinders um einen Winkel von 90$^{\circ}$ erfolgt ein axiales Vorschieben des Zylinders um den Wert eines Zeilenabstandes. Während der anschließenden Drehung des Zylinders um weitere 90$^{\circ}$ erfolgt eine Gravur von Näpfchen entlang der Zeile 2. Anschließend erfolgt wiederum ein axialer Vorschub des Zylinders um das Maß eines Zeilenabstandes, worauf anschließend die Näpfchen entlang der 3. Zeile erzeugt werden. Nach einem weiteren axialen Vorschub werden während des Drehens des Zylinders um weitere 90$^{\circ}$ die Näpfchen entlang der Gravurzeile 4 herausgearbeitet. Dieser Vorgang, der anhand der Figur 5 leicht zu erkennen ist, wiederholt sich bei jeder weiteren Drehung des Zylinders. Der Axialvorschub des Zylinders erfolgt immer nach jeder Drehung des Zylinders um 90$^{\circ}$, d. h. um Winkel- abstand benachbarter Graviereinheiten.

- 13 -

In Figur 6 ist in zur Figur 5 analoger Darstellung ein anderer Verlauf des Graviervorgangs gezeigt. Die Wege, die die einzelnen Gravierorgange beschreiben, sind dabei auf dieselbe Weise gekennzeichnet wie in Figur 5. Im Gegensatz zu dem in Figur 5 dargestellten Verlauf wird beim Verlauf in Figur 6 der Zylinder während der Drehung in seiner Achsrichtung verschoben. Das Maß dieser Axialverschiebung ist derart, daß nach jeder Drehung des Zylinders um 90° ein Vorschub in der Größe eines Zeilenabstandes erfolgt.

Es versteht sich, daß bei mehr oder weniger als vier Graviereinheiten der Graviervorgang entsprechend verläuft.

In Figur 7 ist ein weiteres Ausführungsbeispiel einer Graviereinrichtung in Seitenansicht gezeigt. Auf dem Zylinder 6, dessen Achse mit 10 bezeichnet ist, sind zwei Druckplatten 51 und 52 aufgespannt, die aneinanderstoßen und von denen sich jede über die Hälfte des Umfangs des Zylinders 6 erstreckt, wie das beispielsweise aus der US-PS 4,157,067 bekannt ist. Zum Herausarbeiten der Vertiefungen aus der Oberfläche der Druckformen 51 und 52 sind zwei sich diametral gegenüberliegende Graviereinheiten 53 und 54 vorhanden, die im wesentlichen in einer Ebene liegen, die rechtwinklig zur Zylinderachse 10 verläuft. Gleichwie beim Ausführungsbeispiel gemäß der Figuren 1 und 2 wird der Zylinder 6 um seine Achse 10 gedreht und in Achsrichtung axial verschoben.

- 14 -

Figur 8 zeigt in zu den Figuren 5 und 6 entsprechender Darstellung den Verlauf des Graviervorganges. In dieser Figur 8 sind die Wege, die die beiden Graviereinheiten 53 und 54 entlang der Druckplatten 51 und 52 beschreiben, mit einer ausgezogenen bzw. einer gestrichelten Linie dargestellt. Gleichwie anhand der Figur 7 beschrieben, wird der Zylinder 6 jedesmal gedreht, wenn die beiden Graviereinheiten eine Vertiefung fertig herausgearbeitet haben. Während der ersten Drehung um 180° werden durch die beiden Graviereinheiten die Vertiefungen entlang einer ersten Zeile, die in Umfangsrichtung und somit parallel zur Abszissenachse X verläuft, erzeugt. Während dieser ersten Umdrehung um 180° bearbeitet die Graviereinheit 53 die Druckform 51, während die andere Druckform 52 von der anderen Graviereinheit 54 bearbeitet wird. Nach Vollendung dieser Umdrehung um rund 180° erfolgt im Bereich des mit b in Fig. 7 bezeichneten Plattenstoßes ein Axialvorschub des Zylinders 6 um den Betrag eines Zeilenabschnittes, wie aus Figur 8 hervorgeht. Bei der anschließenden Weiterdrehung um weitere 180° werden die Vertiefungen entlang der 2. Zeile herausgearbeitet, wobei jedoch die Druckplatte 51 von der Graviereinheit 54 und die andere Druckplatte 52 von der Graviereinheit 53 bearbeitet wird. Nach Vollendung der Drehung um insgesamt 360° erfolgt ein erneuter Axialvorschub des Zylinders, worauf auf die beschriebene Weise die Bearbeitung der beiden Druckformen 51 und 52 entlang der 3. Zeile erfolgt. Das Heraus-

- 15 -

arbeiten der Näpfchen entlang der folgenden Zeilen erfolgt entsprechend. In Figur 8 sind mit a bzw. a' die Längen der Druckplatten 51 und 52 in Umfangsrichtung des Zylinders angegeben.

Bei diesem zuletzt beschriebenen Ausführungsbeispiel erfolgt somit jeweils nach einer Drehung des Zylinders um 180$^{o}$ ein Axialvorschub um den Betrag eines Zeilenabstandes. Es versteht sich, daß auch beim Ausführungsbeispiel gemäß Figur 7 der Graviervorgang auf die anhand der Figur 6 beschriebene Weise vor sich gehen kann. Zudem ist es möglich, mehr als zwei Graviereinheiten entlang des Zylinderumfangs anzuordnen, wobei in diesem Fall auf die anhand der Figuren 7 und 8 beschriebenen Weise jede Druckplatte 51 und 52 gleichzeitig durch zwei oder mehr Graviereinheiten bearbeitet wird.

Um bei großen Zylindern die Gravierzeit noch weiter verkürzen zu können, können mehrere in Achsrichtung des Zylinders versetzte Gruppen von Graviereinheiten verwendet werden. Die Graviereinheiten jeder Gruppe sind in Umfangsrichtung des Zylinders gegeneinander versetzt, wie dies anhand der Figuren 2 und 7 bereits erläutert wurde.

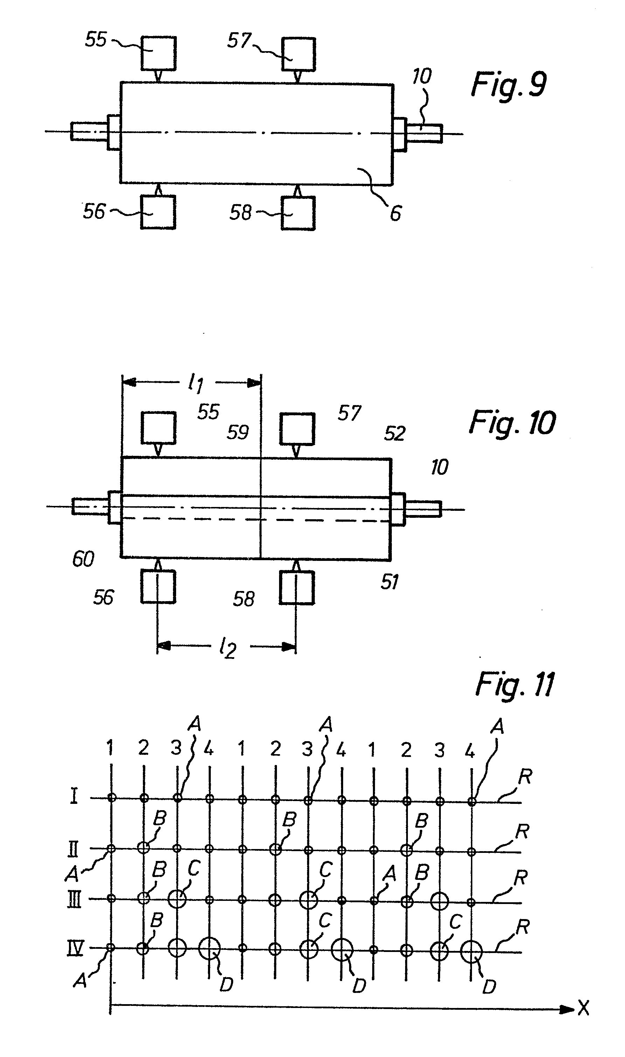

In Figur 9 ist eine solche Lösung gezeigt, bei der zwei Gruppen zu je zwei Graviereinheiten 55 und 56 bzw. 57 und 58 vorhanden sind. Die beiden Graviereinheiten 55 und 56 sowie 57 und 58 jeder Gruppe liegen sich diametral gegenüber

- 16 -

in je einer Ebene, die zur Achse 10 des Zylinders 6 rechtwinklig steht. Der Abstand zwischen den Graviereinheiten 55, 56 und 57, 58 der beiden Gruppen beträgt die Hälfte der Länge des Zylinders 6. Der Graviervorgang läuft im Ausführungsbeispiel gemäß Figur 9 im wesentlichen auf dieselbe Weise ab, wie das vorstehend bereits beschrieben worden ist. Anstatt, wie in Figur 9 gezeigt, entlang des Umfangs des Zylinders 6 eine einzige Druckform anzuordnen, ist es auch möglich, auf die in Figur 7 gezeigte Weise auf dem Zylinder 6 zwei oder mehr Druckplatten aufzuspannen.

Die in Figur 10 gezeigte Ausführungsform könnte als Verdoppelung des in Figur 7 gezeigten Ausführungsbeispiels gezeichnet werden oder sie entspricht in ihrem Aufbau, was die Gravierorgane angeht, der Figur 9. Auf dem Zylinder sind im Unterschied dazu zwei in Achsrichtung nebeneinanderliegende Sätze von Druckformen 51, 52 und 59, 60 aufgespannt, die sich je über die Hälfte des Zylinderumfangs erstrecken. Die Breite der Druckformen 51, 52 bzw. 59 und 60 in Richtung der Zylinderachse 10 wird mit $l_1$ bezeichnet. Ferner sind 2 Gruppen von Graviereinheiten 55 und 56 sowie 57 und 58 vorhanden, die in Achsrichtung um den Abstand $l_2$ gegeneinander versetzt sind, der der Breite $l_1$ entspricht. Jede Gruppe von Graviereinheiten wird durch zwei sich diametral gegenüberliegende Graviereinheiten 55 und 56 bzw. 57 und 58 gebildet. Die Bearbeitung der Druckplatten 51 und 52 durch die Graviereinheiten 57 und 58 und der Platten 59 und 60 durch die Gravier-

- 17 -

einheiten 55 und 56 erfolgt auf die anhand der
Figuren 7 und 8 beschriebene Weise.

Die in Figur 10 gezeigte Ausführungsform erlaubt
es, gleichzeitig vier Druckplatten, 53, 54 bzw. 59,
60 zu bearbeiten und erlaubt es auch, für einen
Mehrfarbendruck alle Druckplatten der Grundfarben gleichzeitig zu gravieren. Das bedeutet
beim gezeigten Ausführungsbeispiel, daß jede
der Druckplatten aufgrund eines Farbauszuges
aus einer Farbvorlage bearbeitet wird. Auf die
anhand der Figur 10 beschriebene Weise ist es
auch möglich, gleichzeitig zwei oder mehr in
Achsrichtung des Zylinders 6 nebeneinanderliegende Druckformen, von denen sich jede für sich
über den gesamten Umfang oder Teile des Umfangs
des Zylinders erstreckt, zu bearbeiten.

Figur 11 zeigt in schematischer Form wie der
Justiervorgang bei vier Graviereinheiten stattfinden soll. In einem ersten Schritt werden entlang
einer Referenzzeile R, die in Umfangsrichtung
des Zylinders und somit parallel zur Abszissenachse X verläuft, durch die erste Graviereinheit
Vertiefungen einer ersten Größe A herausgearbeitet, wie das in der mit I bezeichneten Zeile
dargestellt ist. Dabei wird der Abstand
zwischen den einzelnen Vertiefungen in Umfangsrichtung des Zylinders einjustiert. In einem
zweiten Schritt arbeitet nun die 2. Graviereinheit entsprechend der Referenzzeile R in den
in Figur 11 mit B bezeichneten Vertiefungen
eine zweite Größe (B) heraus (Referenzzeile II).
In einem dritten Schritt werden von der dritten

- 18 -

Graviereinheit entlang der Referenzzeile R Vertiefungen einer dritten Größe C erzeugt, wie das in der mit III bezeichneten Referenzzeile dargestellt ist. Schließlich werden in einem 4. Schritt von der vierten Graviereinheit entsprechend der Referenzzeile R Vertiefungen der Größe R herausgearbeitet, und zwar in der Referenzzeile IV. Da jede Graviereinheit Näpfchen graviert, die sich leicht erkennbar von den von den andereren Graviereinheiten erzeugten Näpfchen unterscheiden, ist es ohne weiteres möglich, die zweite, dritte und vierte Graviereinheit sowohl in Achs- als auch in Umfangsrichtung des Zylinders genau auf den Raster der Näpfchen einzustellen, welcher durch die erste Graviereinheit entlang der Referenzzeile D (I) erzeugt worden ist.

Das gleichzeitige Gravieren an mehreren Stellen ermöglicht ein verhältnismäßig schnelles Herstellen einer oder mehrerer Druckformen. Da die Graviereinheiten in Umfangsrichtung verteilt angeordnet sind, können auch in Achsrichtung des Zylinders gesehen schmale Druckformen an mehreren Stellen gleichzeitig bearbeitet werden. Die erfindungsgemäße Lösung eignet sich zwar nicht ausschließlich, jedoch besonders für die Herstellung von Druckplatten, die, wie in der US-PS 4,157,067 beschrieben, auf einem Druckzylinder aufgespannt sind.

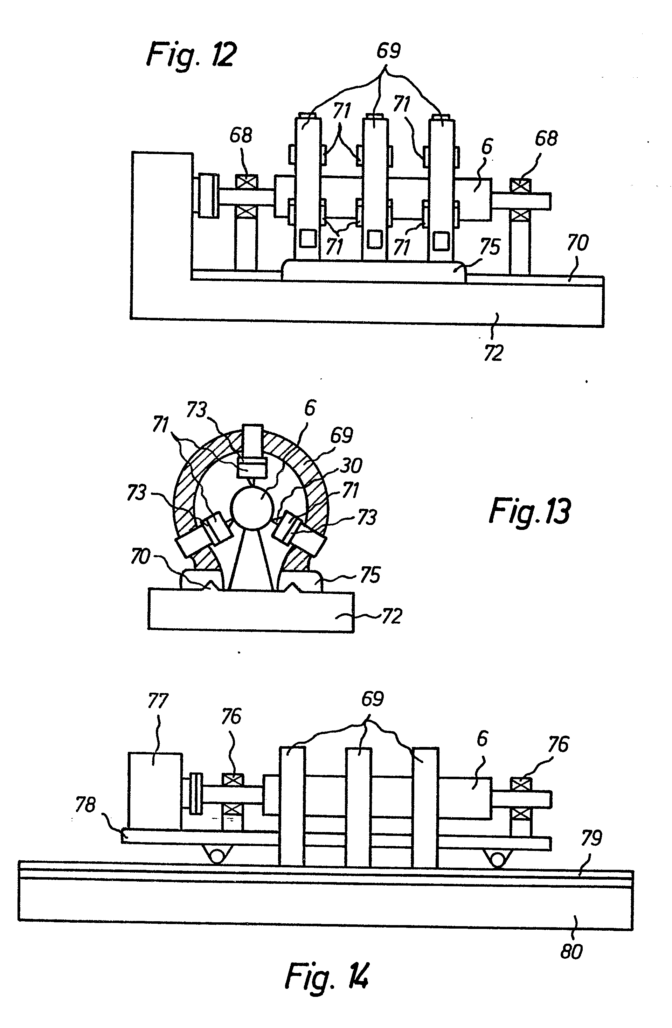

Figur 12 zeigt eine weitere Ausführungsform der Erfindung, die erfindungsgemäß vorsieht, mehrere Gravierorgane pro Strang in Tiefdruckgravier-

- 19 -

maschinen der heute üblichen Bauart mit liegendem normalen Druckzylinder anzuordnen. Wie Figur 12 zeigt, liegt der, wie oben beschrieben, angetriebene Zylinder 6 dabei in ortsfesten Lagern 68. Eine nicht näher dargestellte Vorschubeinrichtung aus Schrittmotor, Spindel und Mutter bewegt ein oder mehrere Gravierorganträger 69 auf Führungsbahnen 70 des Maschinenbettes 71 axial zum Zylinder 6. Diese Gravierorganträger 69 umschließen den Zylinder 6 ganz oder teilweise und nehmen je drei Gravierorgane 71 auf.

Figur 13 zeigt einen Schnitt durch einen solchen Gravierorganträger 69. Die Gravierorgane 71 sind am Gravierorganträger 69 so angebracht, daß sie radial zum Zylinder 6 zugestellt werden können und daß mit Justiereinrichtungen 73 ihre Stichelspitzen 30 auf eine Umfangslinie justiert werden können bzw. bei schrittweisem Vorschub um einen Gravierlinienabstand gegeneinander versetzt eingestellt werden können, wie oben beschrieben. Sind mehrere Gravierorganträger 69 vorhanden, etwa einer pro Strang, so ordnet man sie zweckmäßigerweise, wie in Figur 12 dargestellt, auf einem gemeinsamen Trägerschlitten 75 an, an dem die Vorschubeinrichtung angreift. Die Gravierorganträger 69 wird man dann auf dem Trägerschlitten 75 verschiebbar und feststellbar anordnen, um unterschiedlichen Strangformaten gerecht zu werden.

Figur 14 zeigt schematisch eine Ausführungsform, bei der der Zylinder 6 mit seinen Lagern 76 und dem Antriebsmotor 77 auf einem gemeinsamen Träger 78 angeordnet ist, der sich auf Führungen 79 des Maschinenbettes 80 mittels einer nicht dargestellten Vorschubeinrichtung axial bewegt. Die ähnlich wie in Figur 13 gestalteten Gravierorganträger 69 sitzen dann ortsfest im Abstand einstellbar auf dem Maschinenbett 80.

Es sei noch bemerkt, daß die Gewinnung der Aufzeichnungsdaten durch fotoelektrische Abtastung von Vorlagen, durch Auslesen aus einem Speicher, sei es aus einem Einzelbildspeicher oder Großspeicher, in dem das gesamte Zylinderlayout abgespeichert ist, erfolgen kann. Grundsätzlich ist jede Art der Abtastung geeignet, um die Gravierdaten zu erhalten.

Gegenstand der Erfindung

Patentansprüche

1. Verfahren zum Herstellen von Druckformen, insbesondere Tiefdruckformen, bei denen aus der Oberfläche der Druckform mittels eines Gravierorgans, das von Signalen gesteuert wird, die durch Abtastung von Vorlagen gewonnen werden, entsprechend dem Druckraster näpfchenförmige Vertiefungen graviert werden, dadurch gekennzeichnet, daß die Vertiefungen gleichzeitig durch mindestens zwei Gravierorgane, die in Umfangsrichtung des Zylinders gegeneinander versetzt angeordnet sind, erzeugt werden.

2. Verfahren zur Gravur von zylindrischen Druckformen, insbesondere für Tiefdruck, bei dem Gravierorgan und Druckform relativ so zueinander bewegt werden, daß durch die Gravur eine geschlossene Fläche von Rasterpunkten entsteht, dadurch gekennzeichnet, daß mehrere Gravierorgane am Umfang der Druckform angeordnet sind und daß Druckform und Gravierorgane zur Gravur

- 22 -

axial relativ so zueinander bewegt werden, daß pro Zylinderumdrehung eine solche Anzahl von Gravierlinien entsteht, wie Gravierorgane vorhanden sind und daß pro Zylinderumdrehung ein Axialvorschub zurückgelegt wird, der dem axialen Rasterabstand, multipliziert mit der Anzahl der Gravierorgane, entspricht.

3. Verfahren nach Anspruch 1 oder 2, dadurch gekennzeichnet, daß die Vertiefungen durch mindestens vier Gravierorgane 55, 56, 57, 58 erzeugt werden, die in gegeneinander versetzten Gruppen angeordnet sind, die in Richtung der Zylinderachse 10 gegeneinander versetzt sind und von denen jede Gruppe durch mindestens zwei in Umfangsrichtung des Zylinders 6 gegeneinander versetzte Gravierorgane 55, 56; 57, 58 gebildet werden.

4. Verfahren nach einem der Ansprüche 1 - 3, dadurch gekennzeichnet, daß die Gravierorgane 55, 56 bzw. 57, 58 im wesentlichen in einer rechtwinklig zur Zylinderachse 7 verlaufenden Ebene angeordnet sind.

5. Verfahren nach einem der Ansprüche 1 - 3, dadurch gekennzeichnet, daß die Gravierorgane 55, 56 bzw. 57, 58 in Richtung der Zylinderachse 7 gegeneinander versetzt angeordnet sind.

- 23 -

6. Verfahren nach einem der Ansprüche 1 - 5, dadurch gekennzeichnet, daß die Druckform 6 und die Gravierorgane 55, 56 bzw. 57, 58 einerseits in Umfangsrichtung des Zylinders 6 relativ zueinander gedreht und andererseits in Richtung der Zylinderachse 7 relativ zueinander verschoben werden.

7. Verfahren nach Anspruch 6, dadurch gekennzeichnet, daß die relative axiale Verschiebung kontinuierlich oder jeweils dann erfolgt, nachdem jedes Gravierorgan 55, 56 bzw. 57, 58 eine Vertiefung erzeugt hat.

8. Verfahren nach Anspruch 6, dadurch gekennzeichnet, daß die relative axiale Verschiebung jeweils erfolgt, nachdem jedes Gravierorgan 55, 56 bzw. 57, 58 eine Anzahl von auf einer Umfangslinie des Zylinders 6 liegenden Vertiefungen erzeugt hat.

9. Verfahren nach einem der Ansprüche 1 - 8, dadurch gekennzeichnet, daß jede von wenigstens zwei in Umfangsrichtung des Zylinders 6 aneinanderstoßenden Druckformen 51, 52 gleichzeitig von mindestens einem Gravierorgan 53 bzw. 54 bearbeitet wird.

10. Verfahren nach einem der Ansprüche 3 - 8, dadurch gekennzeichnet, daß mindestens zwei sich über den Umfang des Zylinders 6 erstreckende Druckformen 52, 59 bzw. 51, 60 in Richtung der Zylinderachse 7 nebeneinander angeordnet werden, wobei jede Druckform von

- 24 -

mindestens zwei, eine Gruppe bildenden Gravierorganen 55, 56 bzw. 57, 58, die in Umfangsrichtung des Zylinders 6 gegeneinander versetzt
angeordnet sind, bearbeitet wird.

11. Verfahren nach einem der Ansprüche 3 - 9,
dadurch gekennzeichnet, daß in Richtung der
Zylinderachse 7 nebeneinander mindestens zwei
Sätze von Druckformen 51, 52; 59 60 angeordnet
werden, vor denen jeder Satz aus mindestens
zwei in Umfangsrichtung des Zylinders 6 aneinanderstoßenden Druckformen gebildet wird, und
daß gleichzeitig jede der Druckformen von mindestens einem Gravierorgan 55, 56; 57, 58
bearbeitet wird.

12. Vorrichtung zum Herstellen von Druckformen,
insbesondere Tiefdruckformen, mit einer Graviereinrichtung zum Erzeugen von entsprechend dem
Raster der Druckform verteilten näpfchenförmigen
Vertiefungen aus der Oberfläche der Druckform,
dadurch gekennzeichnet, daß die Graviereinrichtung mindestens zwei in Umfangsrichtung der
Druckform 6 gegeneinander versetzte, gleichzeitig arbeitende Gravierorgane 2, 4 bzw. 3, 5
aufweist.

13. Einrichtung zur Durchführung des Verfahrens
nach Anspruch 1 oder 2, dadurch gekennzeichnet,
daß ein mit waagerechter Achse 10 angeordneter,
motorisch gedrehter Zylinder 6 vorhanden ist,
der mittels einer Vorschubeinrichtung 78 axial

- 25 -

verschiebbar ist und daß am Umfang des Zylinders 6 mehrere justierbare Gravierorgane 71 und eine ortsfeste Aufnahme 69 für die Gravierorgane vorhanden sind.

14. Einrichtung zur Durchführung des Verfahrens nach Anspruch 1 oder 2, dadurch gekennzeichnet, daß ein mit waagerechter Achse 10 angeordneter und an seinen Enden in ortsfesten Auflagen 68 drehbar gelagerter Zylinder 6 vorhanden ist und daß am Umfang des Zylinders mehrere justierbare Gravierorgane 71 und eine axial bewegliche Aufnahme 69 für diese Gravierorgane 71 vorhanden sind.

15. Einrichtung zur Durchführung des Verfahrens nach Anspruch 1 oder 2, insbesondere zur Gravur von Wickelplatten, dadurch gekennzeichnet, daß ein mit senkrechter Achse 10 angeordneter motorisch gedrehter Zylinder 6 vorhanden ist, der mittels einer Vorschubeinrichtung 16, 17; 19, 20 bzw. 40, 41 axial verschiebbar ist und daß am Umfang des Zylinders 6 mehrere justierbare Gravierorgane 2, 3 bzw. 4,5 und eine ortsfeste Aufnahme für diese Gravierorgane vorhanden sind.

16. Einrichtung zur Durchführung des Verfahrens nach Anspruch 1 oder 2, insbesondere zur Gravur von Wickelplatten, dadurch gekennzeichnet, daß ein mit senkrechter Achse angeordneter motorisch gedrehter Zylinder 6 vorhanden ist und daß am Umfang des Zylinders mehrere justierbare Gravierorgane 2,3 bzw. 4,5 angeordnet sind, welche in Axialrichtung des Zylinders verschiebbar sind.

17. Verfahren nach Anspruch 15 oder 16, dadurch gekennzeichnet, daß zur Gravur ein Zylinder benutzt wird, der Aufnahmen für Wickelplatten aufweist.

18. Einrichtung nach Anspruch 15 oder 16, dadurch gekennzeichnet, daß als Vorschubeinrichtung mindestens eine Gewindespindel 17, 20 bzw. 40 mit Mutter 16, 19 bzw. 41 vorgesehen ist.

19. Einrichtung nach Anspruch 18, dadurch gekennzeichnet, daß die Vorschubeinrichtung aus mindestens einer nicht rotierenden mit dem Zylinder 6 verbundenen Gewindespindel 40 besteht, die von mindestens einer motorisch angetriebenen axial gelagerten Mutter 41 axial bewegt wird.

20. Einrichtung nach einem der Ansprüche 12 - 19, dadurch gekennzeichnet, daß die Gravierorgane 2, 3, 4, 5 mit ihren Justiereinrichtungen 28, 29 auf einem den Druckzylinder ganz oder teilweise umgebenden Träger 26 angeordnet sind.

21. Vorrichtung nach Anspruch 12 oder 13, dadurch gekennzeichnet, daß mindestens vier Gravierorgane 55, 56; 57, 58 vorgesehen sind, die in Gruppen angeordnet sind, welche in Richtung der Zylinderachse 7 gegeneinander versetzt sind, von denen jede Gruppe durch mindestens zwei in Umfangsrichtung des Zylinders 6 gegeneinander versetzte Gravierorgane 55, 56; 57, 58 gebildet ist.

22. Vorrichtung nach Anspruch 12 oder 21, dadurch gekennzeichnet, daß die Gravierorgane 55, 56 bzw. 57, 58 im wesentlichen in einer rechtwinklig zur Zylinderachse 7 verlaufenden Ebene angeordnet sind.

23. Vorrichtung nach Anspruch 12, 13 oder 20, dadurch gekennzeichnet, daß die Gravierorgane 55, 56 bzw. 57, 58 in Richtung der Zylinderachse 7 gegeneinander versetzt sind.

24. Vorrichtung nach einer der Ansprüche 12 - 22, dadurch gekennzeichnet, daß die Druckform 6 und die Gravierorgane 55, 56 bzw. 57, 58 einerseits in Umfangsrichtung des Zylinders 6 relativ zueinander drehbar und andererseits in Richtung der Zylinderachse 7 relativ zueinander verschiebbar sind.

25. Vorrichtung nach Anspruch 12 oder einem der Ansprüche 21 - 23 zum gleichzeitigen Gravieren von mindestens zwei in Umfangsrichtung des Zylinders aneinanderstoßende Druckformen, dadurch gekennzeichnet, daß jeder Druckform mindestens ein Gravierorgan 55, 57 bzw. 56, 58 zugeordnet ist.

26. Vorrichtung nach einem der Ansprüche 20 - 23 zum gleichzeitigen Gravieren von mindestens zwei sich über den Umfang des Zylinders erstreckenden Druckformen, die in Richtung der Zylinderachse nebeneinander angeordnet sind, dadurch gekennzeichnet, daß jeder Druckform 51, 52 bzw. 59, 60 mindestens zwei, eine Gruppe bildende Gravierorgane 55, 56; 57, 58, die in Umfangsrichtung des Zylinders gegeneinander versetzt sind, zugeordnet sind.

- 28 -

27. Vorrichtung nach einem der Ansprüche 20 - 24 zum gleichzeitgen Gravieren von mindestens zwei in Richtung der Zylinderachse nebeneinander angeordneten Sätzen von Druckformen, von denen jeder Satz aus mindestens zwei in Umfangsrichtung des Zylinders aneinander anstoßenden Druckformen gebildet ist, dadurch gekennzeichnet, daß jeder Druckform 51, 52 bzw. 59, 60 mindestens ein Gravierorgan 57, 58 bzw. 55, 56 zugeordnet ist.

28. Vorrichtung nach einem der Ansprüche 12 - 26, dadurch gekennzeichnet, daß die Zylinderachse 7 im wesentlichen in vertikaler Richtung verläuft.

Fig. 1

Fig. 2

*Fig. 3*

*Fig. 4*

*Fig. 5*

*Fig. 6*

*Fig. 7*

*Fig. 8*

*Fig. 9*

*Fig. 10*

*Fig. 11*

Fig. 12

Fig.13

Fig. 14

**Europäisches Patentamt**

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| D,Y | DE-B-2 658 502 (DR.-ING. RUDOLF HELL GmbH)<br><br>* Figur 2; Anspruch 1; Spalte 3, Zeile 46 - Spalte 5, Zeile 54 *<br><br>--- | 1-16, 18,20- 28 | H 04 N 1/18 |
| Y | PATENTS ABSTRACTS OF JAPAN, Band 5, Nr. 125(E-69)(797), 12. August 1981<br><br>& JP - A - 56 62477 (IWASAKI TSUSHINKI K.K.) 28.05.1981 * Insgesamt *<br><br>--- | 1-3,5- 8,12- 16,18, 21,23, 24,26- 28 | |
| Y | PATENTS ABSTRACTS OF JAPAN, Band 5, Nr. 59(E-53)(731)<br><br>& JP - A - 56 7560 (RICOH K.K.) 26.01.1981 * Insgesamt *<br><br>--- | 1,4,9, 12,14, 16,18, 20-22, 24,25 | RECHERCHIERTE SACHGEBIETE (Int. Cl. ³)<br><br>H 04 N<br>B 41 C |
| Y | GB-A-2 039 189 (MATSUSHITA ELECTRIC INDUSTRIAL COMPANY LTD., MATSUSHITA GRAPHIC COMMUNICATION SYSTEMS INC.)<br><br>* Zusammenfassung; Figuren 1-3; Anspruch 1; Seite 1, Zeilen 5-83 *<br><br>--- -/- | 3-8,10 -14,16 ,18,21 -24,26 ,27 | |

Der vorliegende Recherchenbericht wurde für alle Patentansprüche erstellt.

| Recherchenort | Abschlußdatum der Recherche | Prüfer |
|---|---|---|
| DEN HAAG | 15-07-1983 | BECKER K.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03.82

))) Europäisches
Patentamt

**EUROPÄISCHER RECHERCHENBERICHT**

| | **EINSCHLÄGIGE DOKUMENTE** | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y | DE-B-1 175 725 (MUIRHEAD & CO., LTD.)<br><br>* Ansprüche 1,2; Spalte 3, Zeile 1- Spalte 4, Zeile 10; Figur 1 * | 10,11, 21,22, 24,26, 27 | |
| | --- | | |
| Y | US-A-2 894 064 (DIGITAL CONTROL SYSTEMS)<br>* Spalte 3, Zeilen 1-16; Figur 1 * | 13,15, 18 | |
| | --- | | |
| A | GB-A-2 061 662 (CANON)<br>* Zusammenfassung; Seite 1, Zeilen 20-28 * | 1-28 | |
| | ----- | | RECHERCHIERTE SACHGEBIETE (Int. Cl. ³) |

Der vorliegende Recherchenbericht wurde für alle Patentansprüche erstellt.

| Recherchenort<br>DEN HAAG | Abschlußdatum der Recherche<br>15-07-1983 | Prüfer<br>BECKER K.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82